# EUROPEAN PATENT APPLICATION

(11) **EP 4 707 219 A1**
(43) Date of publication of application: **11.03.2026**
(21) Application number: 25200658.0
(22) Date of filing: 05.09.2025
(51) Int. Cl.: B66D 1/02, B66D 1/74, F16H 1/00

(54) **TRANSMISSION SYSTEM FOR MANOEUVRING SAIL ROPES IN SAILING VESSELS**

(30) Priority: 06.09.2024 IT 202400019969
(71) Applicant: Antal S.r.l., 35127 Padova Padova (IT)
(72) Inventor: LOZZA, Alberto, 20080 ALBAIRATE (MI) (IT); MARCANTONIO, Rocco, 35020 ALBIGNASEGO (PD) (IT)
(74) Representative: Milan, Guglielmo

(57) **Abstract**

A motion transmission system (1) for manoeuvring sail ropes in sailing vessels, comprising at least one winch (2), at least one winch drive means (3) and kinematic connection means (4) between said at least one drive means and said at least one winch. The kinematic connection means comprise at least one angular drive (5) including a train of gears (6) which mesh together for transmitting a rotary motion from said drive means to said winch. The train of gears comprises a first gear (11) rotatably mounted around a first axis (X1) and a second gear (12) rotatably mounted around a second axis (X2). The angular drive comprises a first and a second supports (21, 22) hinged to each other around a hinge axis (X3) and adjustment means (7) of the relative angular position (A) between said supports (21, 22) around said hinge axis. The first and second gears (11, 12) are respectively mounted on said first and second supports (21, 22) in such a manner as to allow adjustment of the relative angular position (A) between said first and second axes (X1, X2) around said hinge axis (X3) through said adjustment means.

## Description

The present invention relates to a transmission system for manoeuvring sail ropes in sailing vessels.

The transmission system of the present invention finds a preferred, though not exclusive, application in medium to large racing sailing vessels.

As is well known, the motion transmission systems for manoeuvring sail ropes in medium to large vessels typically comprise a plurality of winches, a plurality of winch drive pedestals and kinematic connection means between the pedestals and the winches.

Winches are used in sailing vessels to facilitate manoeuvring and adjusting sails under stress, such as sail positioning operations. These operations are performed by manoeuvring suitable ropes (also commonly referred to as sheets or halyards), appropriately connected to the sails; the ropes, in particular, are pulled by winding them up onto the winches, which are appropriately positioned on the deck of the vessel.

The pedestals (also known by the English term of coffee grinder) are generally positioned on the deck of the vessel in a remote position from the winches and are equipped with handles operated in rotation by the sailors of the vessel's crew.

The motion imparted by the sailors on the pedestals is transferred to the winches along a kinematic motion transmission path defined by kinematic connection means between the pedestals and the winches.

The deck layout of such vessels is designed in such a way that winches intended to work with particularly high loads, such as primary winches in strong wind conditions, can be operated simultaneously by several crew members. In this case, these winches are operated by means of several drive pedestals, typically two or three, but theoretically also more, connected to each other kinematically so as to synchronise the motions imparted by each of them.

Typically, the kinematic connection means comprise, in particular, a motion transmission shaft positioned under the deck of the vessel exiting the pedestal and a 90° drive box positioned at a certain distance below the winch and adapted to deflect back to the winch the rotary motion imparted by the sailors on the handles of the pedestal and transmitted via the shaft.

A transmission system with these features is described for example in EP1650124B1. A major drawback of this technology lies in the fact that the 90° angular drive imposes a fixed geometry on the kinematic path of rotary motion transmission that is difficult to adapt to the specific layout of each vessel.

The 90° angular drive therefore tends to lengthen the kinematic path of rotary motion transmission with a significant increase in power dissipation.

Note that in order to overcome the misalignment between the 90° angular drive motion output axis and the winch motion input axis, it is necessary for the 90° angular drive output to be connected to the winch input via a cardan shaft whose cardan joints inevitably absorb some of the transmitted power.

A further drawback of the aforementioned prior art is that the 90° angular drive takes up a large part of the usable height of the rooms below the deck of the vessel.

The technical problem underlying the present invention is to provide a motion transmission system for manoeuvring sail ropes in sailing vessels that is structurally and functionally designed to at least partially obviate the drawbacks mentioned with reference to the aforementioned prior art.

In the context of this problem, it is an aim of the invention to develop a motion transmission system for manoeuvring sail ropes that is particularly suitable for use in regattas.

Another purpose of the invention is to provide a motion transmission system for manoeuvring sail ropes that allows for new motion transmission configurations on board vessels.

This problem is solved and these aims are achieved at least in part by means of a motion transmission system for manoeuvring sail ropes in sailing vessels made in accordance with at least some of the features that are the subject of the appended claims.

The motion transmission system for manoeuvring sail ropes in sailing vessels preferably comprises at least one winch, preferably at least one winch drive means and preferably kinematic connection means between said at least one drive means and said at least one winch.

Preferably the kinematic connection means comprise at least one angular drive. Preferably, the angular drive includes a train of gears which mesh together for transmitting a rotary motion from the drive means to the winch. Preferably, the train of gears comprises a first gear rotatably mounted around a first axis and a second gear rotatably mounted around a second axis.

The angular drive preferably comprises a first and second supports hinged to each other around a hinge axis and preferably adjustment means of the relative angular position between said supports around the hinge axis.

Preferably, the first and second gears are mounted on the first and second supports, respectively, in such a manner as to allow adjustment of the relative angular position between the first and second axes around the hinge axis through the adjustment means.

In this way, the kinematic motion transmission path can be adapted to the specific layout of each vessel in order to increase the efficiency of the transmission and reduce the space occupied by the system in the rooms below the vessel's deck.

The present invention may also have one or more of the following preferred features in addition to those mentioned above.

In embodiments, the first and second gears (preferably bevel gears) are kinematically connected via an intermediate gear (also preferably a bevel gear) which is rotatably mounted on the first and/or second supports around the hinge axis. Thanks to this feature, the angular drive can have three axes for the transmission of motion: the first axis, the second axis and the hinge axis.

Preferably the first gear meshes with the intermediate gear, which in turn meshes with the second gear. In other words, the three gears mesh in cascade in the order mentioned. This results in a compact angular drive that contributes to shortening the kinematic motion transmission path.

In embodiments, the intermediate gear can have a number of teeth less than, equal to or greater than the number of teeth of the first and/or second gears.

Preferably at least the first and second gears have the same number of teeth. In this way, a constant transmission ratio of 1 is achieved between the first and second gears, while the transmission ratio at the intermediate gear axis can be changed by altering the number of teeth of the intermediate gear without affecting the transmission ratio between the first and second gears.

In embodiments, the intermediate gear has a number of teeth less than, equal to or greater than the number of teeth of the first and second gears.

In particular, if the intermediate gear has a number of teeth equal to the number of teeth of the first and second gears, the gear pairs all provide the same transmission ratio of 1, and advantageously the angle between the first and second axes can be adjusted in a range comprised between -75° and +75°.

Conversely, if the intermediate gear has a number of teeth less than or greater than the number of teeth of the first and second gears, a reduction or multiplication ratio can be achieved at the axis of the intermediate gear.

Furthermore, if the intermediate gear has a greater number of teeth than the number of teeth of the first and second gears, the angle between the first and second axes can be adjusted in a wider range, advantageously comprised between -90° and +90°. Preferably the hinge axis is perpendicular to the first and second axes. It will be appreciated that the presence of a third axis perpendicular to the first two allows for new motion transmission configurations.

Preferably the kinematic connection means comprise at least one cardan shaft. Preferably the cardan shaft is connected to the first axis of the angular drive. Preferably the second axis of the angular drive is connected to a rotating drum of the winch. In this way, the angular drive can be attached directly to the winch inlet so as to minimise the space occupied by the system in the rooms below the vessel's deck. Preferably, the cardan shaft forms an angle of less than 90° with respect to the axis of rotation of the drum of the winch (more specifically, the angle is less than 90° with respect to the extension of the axis of rotation of the drum of the winch below the vessel's deck). Thanks to this inclination, the cardan shaft can directly connect an angular drive arranged at the winch inlet with a drive means (e.g. a pedestal or another angular drive) arranged at the base of the vessel's cockpit.

Preferably the second support is fixed to a portion of the base of the winch on the opposite side of the rotating drum of the winch. This results in a compact and robust system.

Preferably, the adjustment means comprise releasable fixing means configured to define the angular position of a support with respect to the other one around the hinge axis. This allows the inclination of the first axis with respect to the second axis to be locked in the desired angular position around the hinge axis.

Preferably, the fixing means comprise a plurality of openings obtained in corresponding positions in the first and second supports to accommodate a respective fixing element. The openings may include holes and/or slots for discrete or continuous adjustment. This results in a plurality of freely selectable angular positions according to application requirements. In addition, adjustment of the angular position is facilitated by the angular references offered by the plurality of openings.

Preferably the supports comprise respective forks. Preferably each fork has a pair of side walls hinged to the side walls of the other fork around the hinge axis. Preferably the adjustment means comprise at least one side wall of the first fork and a corresponding side wall of the second fork. In this way, the corresponding side walls can be used to adjust the angular position of one fork with respect to the other.

Preferably, at least a first and a second rings of holes are obtained in corresponding positions through one of the side walls of the first support and the corresponding side wall of the second support, respectively, to accommodate a respective fixing element of the angular position of a fork with respect to the other one around the hinge axis. These features contribute to precise and reliable angular adjustment.

It should be noted that, in this context, the term "axis" can be used to refer either to the geometric entity or to the physical entity (the rotating member) corresponding to the geometric entity.

Preferably, the at least one winch drive means comprises a manual drive means. Manual drive can be either hand- or pedal-operated. Preferably, the at least one drive means comprises a pedestal. However, the use of a non-manual drive means, in particular an electric or hydraulic motor, is also contemplated.

The features and advantages of the invention will become clearer from the following detailed description of a preferred but not exclusive embodiment thereof illustrated, by way of indicative but not limiting example, with reference to the accompanying drawings in which:
- Figures 1 and 2 are cross-sectional and longitudinal views respectively of a portion of a deck of a sailing vessel provided with a transmission system in accordance with the present invention;
- Figure 3 is a top view of the transmission system shown in the previous figures;
- Figure 4 is an enlarged view of a detail of Figure 3;
- Figure 5 is a perspective view of a detail of the transmission system in accordance with the present invention;
- Figures 6 and 7 are lateral views of the detail in Figure 5 in two different operating configurations;
- Figure 8 is a sectional view according to section line VIII-VIII of the detail in Figure 7.

In the figures, a preferred embodiment of the transmission system according to the present invention is overall indicated by 1. Such a transmission system comprises a winch 2, a winch drive means 3 such as, in particular, a pedestal 30 and kinematic connection means 4 between the pedestal and the winch for the transmission of a rotary motion from the pedestal to the winch along a kinematic motion transmission path.

In embodiments the kinematic connection means 4 comprise a shaft 8, preferably cardan, for transmitting the output motion from the pedestal 30 and an angular drive 5 positioned below the winch 2 and adapted to return to the winch the rotary motion imparted by the sailors on the handles of the pedestal 30 and transmitted via the shaft 8. This angular drive is preferably positioned at the input of the winch 2, in particular between the winch and the shaft 8.

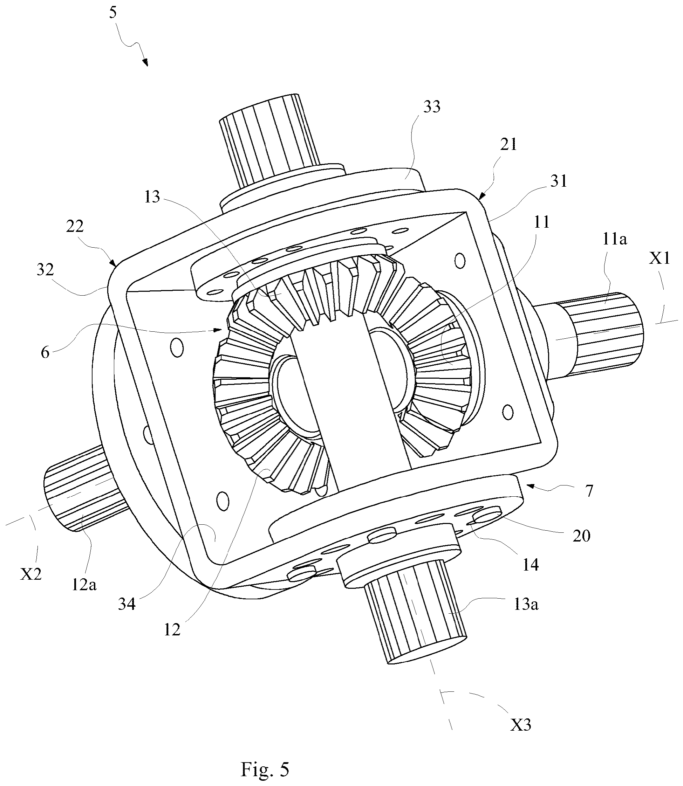

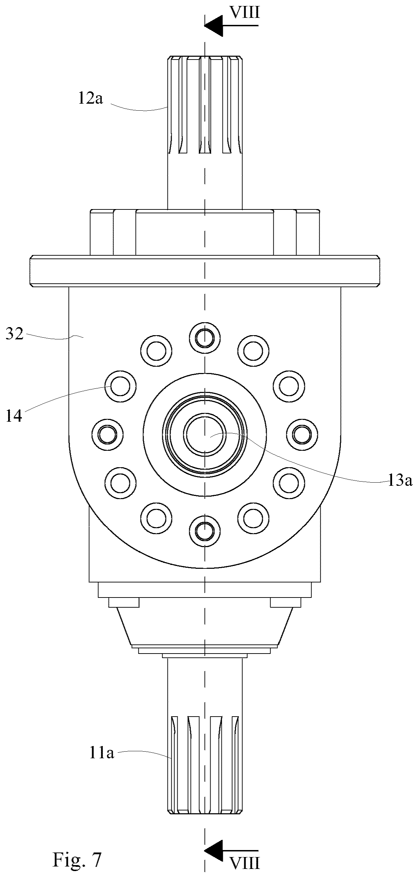

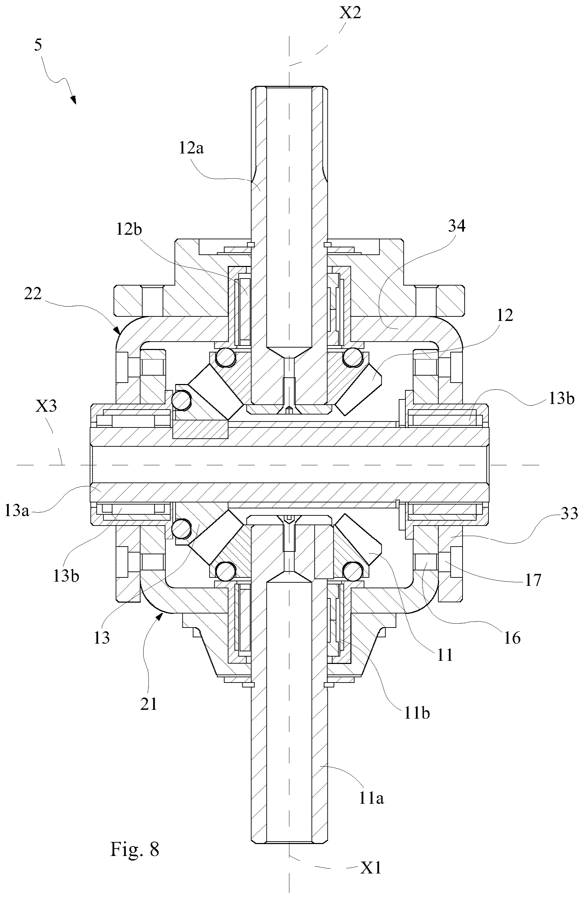

As shown in the example in Figures 5-8, the angular drive 5 includes a train of gears 6, preferably bevel gears, which mesh together to transmit the rotary motion from the pedestal to the winch.

The train of gears 6 preferably comprises a first gear 11 and a second gear 12, preferably bevel gears, between which an intermediate gear 13, also preferably a bevel gear, is interposed. Preferably the first gear 11 meshes with the intermediate gear 13, which in turn meshes in cascade with the second gear 12. In the example of Figures 5-8, the gears 11, 12, 13 all have the same number of teeth; however, it is also contemplated that the intermediate gear 13 may have a number of teeth less than, equal to or greater than the number of teeth of the first and/or second gears 11, 12.

Preferably the angular drive 5 comprises a first and second supports 21, 22 to support the train of gears 6. Preferably, the first gear 11 and the intermediate gear 13 are mounted on the first support 21 in a rotatable manner around a first axis X1 and a hinge axis X3 perpendicular to each other, respectively. Preferably the second gear 12 is mounted on the second support 22 in a rotatable manner around a second axis X2, preferably perpendicular to the hinge axis X3.

In embodiments, the first gear 11 is splined to a first spindle 11a which is mounted on the first support 21 in a rotatable manner around the first axis X1 preferably via a first bearing 11b. In embodiments, the second gear 12 is splined to a second spindle 12a which is mounted on the second support 22 in a rotatable manner around the second axis X2 preferably via a second bearing 12b. In embodiments, the intermediate gear 13 is splined to an intermediate spindle 13a which is mounted on both supports 21, 22 in a rotatable manner around the hinge axis X3 preferably via respective bearings 13b.

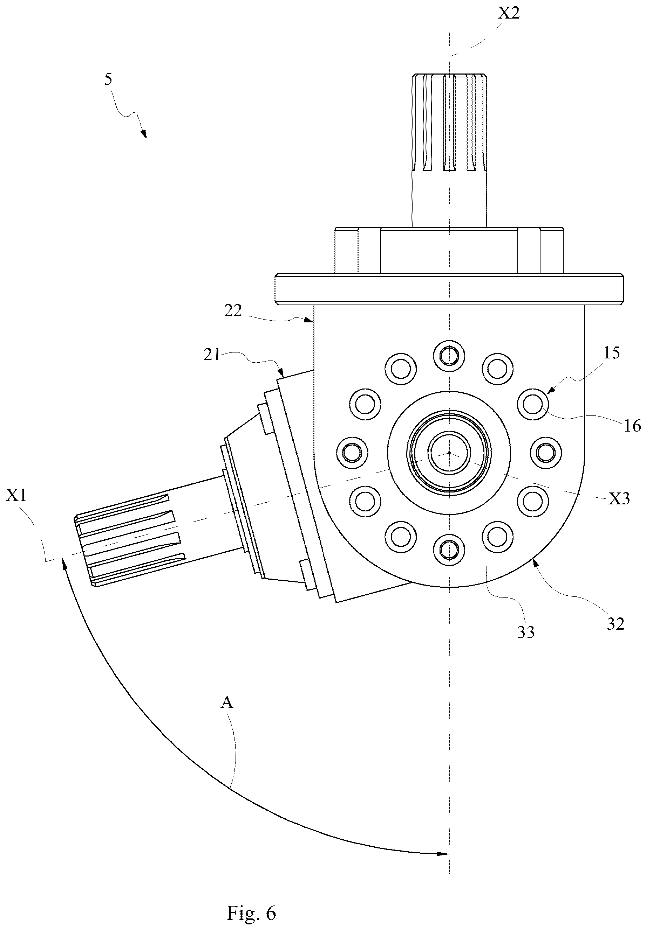

The second support 22 is hinged to the first support 21 around the hinge axis X3 in such a way that the angle A between the first and second axes X1, X2 can be adjusted. In embodiments the intermediate spindle 13a acts as a hinge between the two supports 21, 22. As shown in the example in Figure 6, the angle A between the first and second axes X1, X2 is preferably adjustable in a range of at least -75° to +75° and in embodiments between -90° and +90°.

In embodiments the first and second axes X1, X2 are incidental to each other and preferably also incidental with respect to the hinge axis X3.

Preferably, the first axis X1 acts as the axis of motion input into the angular drive and the second axis X2 acts as the axis of motion output from the angular drive, or vice versa. The hinge axis X3, instead, preferably acts as a motion transmission axis between the first and second axes X1, X2. However, it is also contemplated that the hinge axis X3 may act as the axis of motion input into the angular drive, while the first and/or second axes act as axes of motion output from the angular drive.

In embodiments, the winch 2 comprises a rotating drum 9 for manoeuvring the sail ropes and preferably a base portion 10 for anchoring the winch to the deck 18 of the vessel. Preferably the second support 22 of the angular drive is fixed to the base portion 10 of the winch on the opposite side of the rotating drum 9. In embodiments, the first gear 11 of the angular drive is associated with the transmission shaft 8 and the second gear 12 is associated with the drum 9 of the winch. In other words, the transmission shaft 8 is connected to the first spindle 11a, while the second spindle 12a is connected to the winch input. Preferably the transmission shaft 8 is rotatable around the first axis X1 of the angular drive and preferably the drum 9 of the winch is rotatable around the second axis X2. Preferably, the first axis X1 acts as the axis of rotation of the transmission shaft 8 and the axis of motion input into the angular drive, while the second axis X2 acts as the axis of motion output from the angular drive and the axis of motion input into the winch. Preferably the transmission shaft 8 is connected to the angular drive 5 in such a way that it forms an angle A of less than 90° with respect to the axis of rotation of the drum 9 of the winch. Preferably, the angle A is comprised at least between -75° and +75° and in embodiments between -90° and +90°.

Preferably, the angular drive 5 comprises adjustment means 7 of the relative angular position A between the two supports 21, 22 around the hinge axis X3 to allow adjustment of the relative angular position A between the first and second axes X1, X2. The adjustment means 7 preferably comprise releasable fixing means 14 configured to define the angular position A of one support with respect to the other one around the hinge axis X3.

In embodiments, the fixing means 14 comprise a plurality of openings 15 obtained in corresponding positions in the first and second supports 21, 22 to accommodate a respective fixing element 20 e.g. screw or bolt.

In a preferred example, the first and second supports 21, 22 comprise a first and second forks 31, 32 respectively. As shown in the example in Figure 5, the forks are preferably made of fibre-reinforced composite material. Each fork preferably comprises a central portion 34 from which a pair of side walls 33 extends. Preferably the first and second gears 11, 12 are mounted on the central portion 34 of the respective forks. In other words, the first and second spindles 11a, 12a are preferably mounted on the central portion 34 of the respective forks.

Preferably the side walls 33 of one fork are hinged to the side walls of the other fork around the hinge axis X3. In other words, the intermediate spindle 13a preferably acts as a hinge between the side walls of one fork and the side walls of the other fork.

Preferably at least one side wall of the first fork 31 is coupled or couplable to a corresponding side wall of the second fork 32 to define the angular position A of one fork with respect to the other. In embodiments, at least a first and a second rings of holes 16, 17 are obtained in corresponding positions through one of the side walls of the first fork 31 and the corresponding side wall of the second fork 32, respectively, to accommodate a respective fixing element of the angular position A of one fork with respect to the other around the hinge axis X3.

The holes 16, 17 are preferably through and evenly distributed around the hinge axis X3.

In a preferred example, the two supports are fixed together by means of bolt or screw connections passing through holes obtained in the side walls of the first fork 31 and in corresponding holes made in an analogous position on the side walls of the second fork 32.

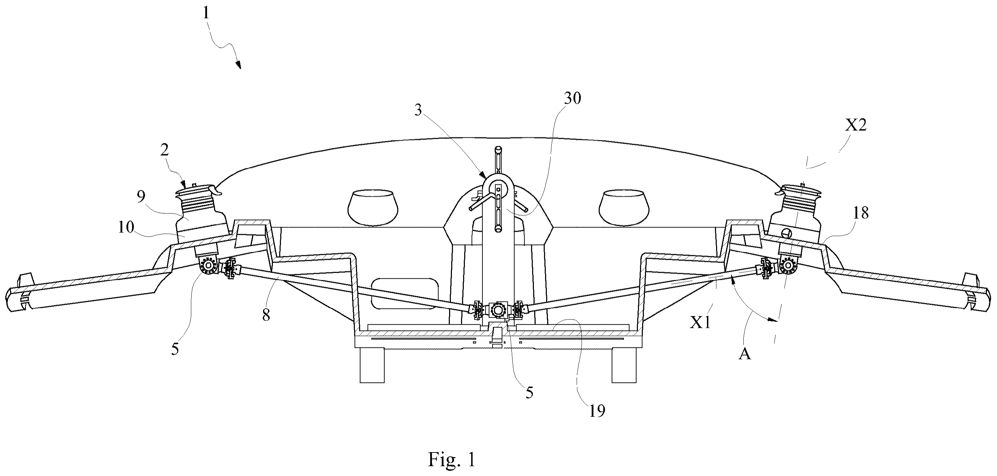

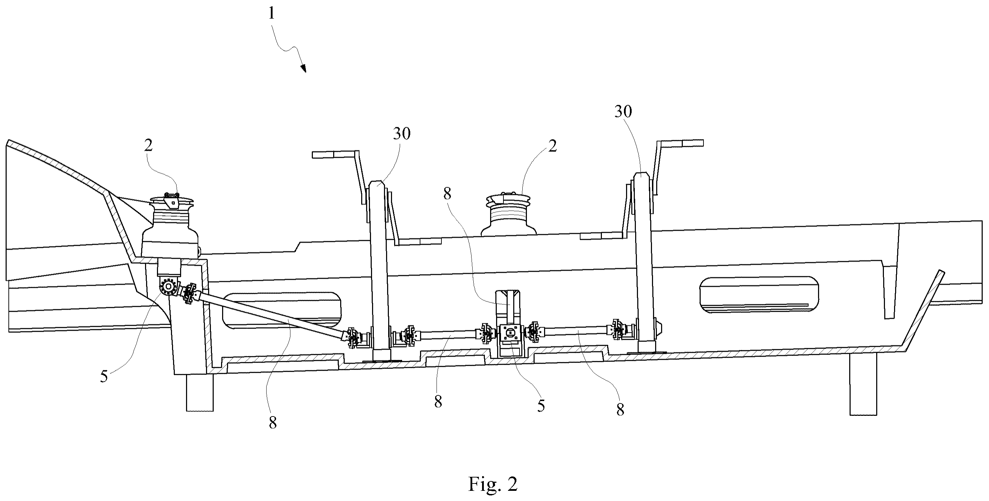

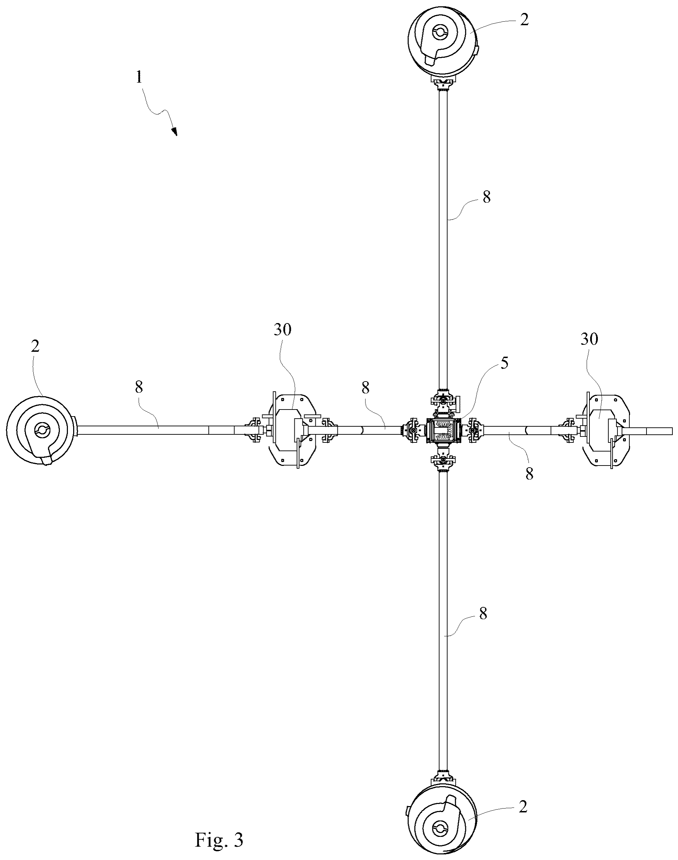

Figures 1-4 show a preferred embodiment of a layout of a vessel having the transmission system 1 according to the present invention, comprising a plurality of winches 2, operated by a plurality of pedestals 30. Also visible in these illustrative figures are a plurality of motion transmission shafts 8 from the pedestals to the winches and a plurality of angular drives 5 provided with the adjustment means 7 of the angular position A.

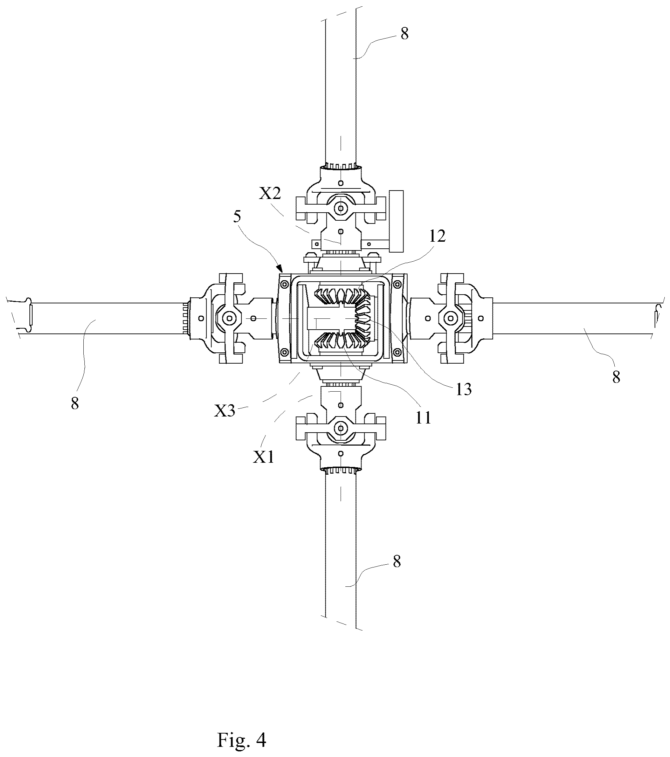

It is preferred that each angular drive 5 be positioned at the input of a respective winch 2. However, it is also contemplated that an angular drive 5 may be positioned at the intersection of two or more transmission shafts 8, for example at the base of the vessel's cockpit 19, as shown in the embodiment in Figure 4. In this case, the hinge axis X3 acts as motion input axis into the angular drive 5 while the other two axes X1, X2 act as motion output axes from the angular drive. This embodiment makes it possible to synchronise the motions imparted by several pedestals and adjust the angle between the two output axes to transmit the motion to several winches.

The invention thus solves the proposed problem by achieving numerous advantages, including higher efficiency in power transmission and greater flexibility in creating new motion transmission layouts.

## Claims

1. Motion transmission system (1) for manoeuvring sail ropes in sailing vessels, comprising at least one winch (2), at least one winch drive means (3) and kinematic connection means (4) between said at least one drive means and said at least one winch, wherein said kinematic connection means comprise at least one angular drive (5) including a train of gears (6) which mesh together for transmitting a rotary motion from said drive means to said winch, said train of gears comprising a first gear (11) rotatably mounted around a first axis (X1) and a second gear (12) rotatably mounted around a second axis (X2), **characterised in that** said angular drive comprises a first and a second supports (21, 22) hinged to each other around a hinge axis (X3) and adjustment means (7) of the relative angular position (A) between said supports (21, 22) around said hinge axis, said first and second gears (11, 12) being respectively mounted on said first and second supports (21, 22) in such a manner as to allow adjustment of the relative angular position (A) between said first and second axes (X1, X2) around said hinge axis (X3) through said adjustment means.

2. Transmission system (1) according to claim 1, wherein said first and second gears (11, 12) are kinematically connected through an intermediate gear (13) which is rotatably mounted on at least one of said supports (21, 22) around said hinge axis (X3).

3. Transmission system (1) according to claim 2, wherein said first gear (11) meshes with said intermediate gear (13) which in turn meshes with said second gear (12).

4. Transmission system (1) according to claim 2 or 3, wherein at least said first and second gears (11, 12) have the same number of teeth, said intermediate gear (13) having a number of teeth less than, equal to or greater than the number of teeth of said first and second gears (11, 12).

5. Transmission system (1) according to one or more of the preceding claims, wherein said hinge axis (X3) is perpendicular to said first and second axes (X1, X2).

6. Transmission system (1) according to one or more of the preceding claims, wherein said kinematic connection means (4) comprise at least one cardan shaft (8) connected to said first axis (X1), said second axis (X2) being connected to a rotating drum (9) of the winch.

7. Transmission system (1) according to the preceding claim, wherein said cardan shaft (8) forms an angle (A) of less than 90° with respect to the axis of rotation of the drum (9) of the winch.

8. Transmission system (1) according to one or more of the preceding claims, wherein the second support (22) is fixed to a base portion (10) of the winch on the opposite side to the rotating drum (9) of the winch.

9. Transmission system (1) according to one or more of the preceding claims, wherein said adjustment means (7) comprise releasable fixing means (14) configured to define the angular position (A) of a support with respect to the other one around said hinge axis (X3).

10. Transmission system (1) according to the preceding claim, wherein said fixing means (14) comprise a plurality of openings (15) obtained in corresponding positions in said first and said second supports (21, 22) to accommodate a respective fixing element.

11. Transmission system (1) according to one or more of the preceding claims, wherein said first and said second supports (21, 22) comprise a first and a second forks (31, 32) respectively, each fork having a pair of side walls (33) hinged to the side walls of the other fork around said hinge axis (X3), wherein said adjustment means (7) comprise at least one side wall of the first fork (31) and a corresponding side wall of the second fork (32).

12. Transmission system (1) according to the preceding claim, wherein at least a first and a second rings of holes (16, 17) are obtained in corresponding positions through one of the side walls of the first fork (31) and the corresponding side wall of the second fork (32), respectively, to accommodate a respective fixing element of the angular position (A) of a fork with respect to the other one around said hinge axis (X3).

13. Transmission system (1) according to one or more of the preceding claims, wherein said at least one drive means (3) comprises a pedestal (30).
